# FASCICULE DE BREVET EUROPEEN

(11) **EP 1 815 482 B1**
(45) Date de publication et mention de la délivrance du brevet: **06.07.2011**
(21) Numéro de dépôt: 05804243.3
(22) Date de dépôt: 26.09.2005
(51) Int. Cl.: G21C 17/017, G21D 1/02, B01F 5/04, B23K 31/02

(54) **ELEMENT DE TUYAUTERIE EN FORME DE T D'UN CIRCUIT AUXILIAIRE D'UN RÉACTEUR NUCLÉAIRE, PIÈCE DE RACCORDEMENT ET PROCÉDÉ DE RÉALISATION ET DE MONTAGE DE L'ÉLÉMENT DE TUYAUTERIE**
T-FÖRMIGES ROHRPASSELEMENT IN BEZUG AUF EINE HILFSSCHALTUNG EINES KERNREAKTORS, VERBINDUNGSSTÜCK UND VERFAHREN ZUM HERSTELLEN UND ASSEMBLIEREN DES ROHRPASSELEMENTS
T-SHAPED PIPEFITTING ELEMENT PERTAINING TO AN AUXILIARY CIRCUIT OF A NUCLEAR REACTOR, CONNECTION PIECE, AND METHOD FOR PRODUCING AND ASSEMBLING THE PIPEFITTING ELEMENT

(30) Priorité: 15.10.2004 FR 0410971
(43) Date de publication de la demande: 08.08.2007
(73) Titulaire: Areva NP, 92400 Courbevoie (FR)
(72) Inventeur: MEYZAUD, Yves, F-78630 MORAINVILLIERS (FR); LE DUFF, Jean Alain, F-78300 POISSY (FR)
(74) Mandataire: Neyret, Daniel Jean Marie
(86) Numéro de dépôt international: PCT/FR2005/002380
(87) Numéro de publication internationale: WO 2006/042924

(56) Documents cités:
- DE-A1- 3 218 337
- DE-A1- 19 527 634
- PATENT ABSTRACTS OF JAPAN vol. 2000, no. 11, 3 janvier 2001 (2001-01-03) & JP 2000 234144 A (HITACHI LTD), 29 août 2000 (2000-08-29)
- PATENT ABSTRACTS OF JAPAN vol. 018, no. 162 (P-1712), 17 mars 1994 (1994-03-17) & JP 05 333177 A (MITSUBISHI ATOM POWER IND INC), 17 décembre 1993 (1993-12-17)
- PATENT ABSTRACTS OF JAPAN vol. 1999, no. 01, 29 janvier 1999 (1999-01-29) & JP 10 273733 A (TOSHIBA CORP), 13 octobre 1998 (1998-10-13)

## Description

L'invention concerne un élément de tuyauterie en forme de T d'un circuit auxiliaire d'un réacteur nucléaire refroidi par de l'eau sous pression, une pièce de raccordement comportant l'élément de tuyauterie en forme de T et un procédé de montage ou de remplacement de l'élément de tuyauterie en forme de T, dans un circuit auxiliaire de réacteur nucléaire.

Les réacteurs nucléaires refroidis par de l'eau sous pression comportent un circuit principal, ou circuit primaire, dans lequel circule l'eau de refroidissement sous pression du réacteur nucléaire et des circuits auxiliaires raccordés au circuit primaire pour réaliser différentes fonctions, pendant le fonctionnement du réacteur nucléaire ou lors d'un arrêt du réacteur.

En particulier, les réacteurs nucléaires refroidis par de l'eau sous pression comportent un circuit de refroidissement auxiliaire, appelé circuit RRA, qui est utilisé pour réaliser le refroidissement et la dépressurisation de l'eau de refroidissement dans le circuit primaire du réacteur nucléaire, à la suite d'un arrêt programmé du réacteur, par exemple pour rechargement en assemblages de combustible ou encore d'un arrêt nécessité par un incident de fonctionnement.

Dans un premier temps, l'eau du circuit primaire est refroidie depuis la température de service dans le réacteur en fonctionnement (de l'ordre de 315°C) et dépressurisée, par passage dans les générateurs de vapeur dont on réalise l'échappement de la vapeur. L'eau du circuit primaire est généralement refroidie jusqu'à une température de l'ordre de 180°C et dépressurisée jusqu'à une pression inférieure à 30 bars.

Le refroidissement ultérieur de l'eau primaire jusqu'aux conditions de refroidissement à l'arrêt est réalisé dans le circuit RRA qui comporte en particulier des pompes et des échangeurs de chaleur alimentés en eau de refroidissement du réacteur sur un côté primaire et du côté secondaire par de l'eau de réfrigération.

L'eau du circuit primaire est prélevée, généralement dans deux branches chaudes de deux boucles du circuit primaire, pour être refroidie et dépressurisée dans le circuit RRA avant d'être réintroduite dans deux branches froides de boucles du circuit primaire.

On réalise généralement le mélange d'eau primaire qui n'a pas encore été refroidie, avec de l'eau refroidie dans les échangeurs de chaleur. Une partie de l'eau obtenue par mélange est également réintroduite dans l'eau primaire à haute température provenant des branches chaudes de boucles du circuit primaire, en amont des échangeurs de chaleur du circuit RRA. Il est également possible de mélanger de l'eau obtenue par mélange avec de l'eau refroidie.

Par exemple, le mélange d'eau primaire à haute température constituant un premier fluide circulant dans le circuit auxiliaire et d'eau refroidie constituant un second fluide circulant dans le circuit auxiliaire peut être réalisé à l'intérieur de raccords de tuyauteries en T qui comportent, d'une part, une branche principale qui est intercalée entre deux tronçons d'une première tuyauterie du circuit auxiliaire dans laquelle circule de l'eau primaire à haute température constituant un premier fluide d'échange et, d'autre part, une branche latérale, généralement perpendiculaire à la branche principale reliée à une seconde tuyauterie du circuit auxiliaire recevant de l'eau refroidie. L'eau refroidie, du fait d'un mélange imparfait avec l'eau primaire à refroidir et de variations des conditions de mélange, produit des variations de température à une assez haute fréquence qui entraînent une fatigue thermique du matériau constituant l'élément de tuyauterie de raccordement et de mélange en forme de T. Il peut en résulter une fissuration d'origine thermique de la surface interne et même de l'ensemble de la paroi du raccord tubulaire en T par des phénomènes tels que le faïençage thermique. L'effet des contraintes induites dans la paroi interne de l'élément de tuyauterie est d'autant plus marqué que le T de raccordement doit être relié à la conduite par des soudures qui rendent la paroi interne plus sensible aux détériorations par effet de concentration des déformations thermiques ou par la corrosion.

Les conduites des circuits auxiliaires des réacteurs nucléaires à eau sous pression et en particulier les tuyauteries constituant le circuit RRA sont généralement réalisées en acier inoxydable austénitique et les éléments de tuyauteries de raccordement et de mélange en forme de T sont également en acier inoxydable austénitique et reliés aux tuyauteries du circuit auxiliaire par des soudures.

II s'est avéré que, lorsqu'on utilise de tels aciers inoxydables austénitiques dans les circuits auxiliaires d'un réacteur nucléaire refroidi par de l'eau sous pression, il est nécessaire de prendre diverses mesures pour limiter les détériorations au niveau des éléments de raccordement et de mélange en forme de T, sous l'effet des sollicitations. On réalise par exemple l'arasage des soudures de raccordement du T et un polissage des zones critiques de la surface interne de l'élément de raccordement pour éviter le développement de fissures. En outre, un contrôle périodique doit être prévu pour permettre de vérifier l'efficacité des mesures prises.

On a également envisagé d'utiliser des dispositifs de protection interne de la paroi des éléments de tuyauterie au niveau du T de raccordement, comportant une paroi de protection tubulaire fixée dans une disposition coaxiale à l'intérieur de la branche principale du T. Une telle paroi de protection jouant le rôle de manchette thermique, selon une technique bien connue utilisée dans le domaine de l'industrie nucléaire doit être percée de trous, pour qu'on puisse réaliser le mélange d'eau primaire à haute température et d'eau refroidie au niveau de l'élément de tuyauterie en forme de T, au moins dans toute la partie de la paroi de protection située dans la zone où la branche latérale débouche dans la branche principale du T. Les trous traversants doivent être judicieusement dimensionnés pour permettre la création d'un grand nombre de jets d'eau froide dans la veine d'eau primaire chaude en circulation dans la branche principale, ce qui facilite le mélange de l'eau de refroidissement à haute température constituant le premier fluide et de l'eau à plus basse température constituant le second fluide, à l'intérieur de la paroi de protection tubulaire.

En outre, l'utilisation d'une paroi de protection tubulaire percée présente deux inconvénients majeurs.

Tout d'abord, les débits d'eau à haute température et d'eau refroidie peuvent varier dans une très large plage pendant le fonctionnement du circuit RRA. Il en est de même de la pression des fluides au niveau de l'élément de raccordement et de mélange en T. Dans ces conditions de fonctionnement essentiellement variables, le T de raccordement comportant une paroi tubulaire de protection et de mélange peut être totalement inefficace dans certaines phases de fonctionnement.

De plus, les pertes de charge dues au passage de l'eau refroidie à travers les trous de la paroi de protection tubulaire sont très élevées, lorsque le débit d'eau refroidie est maximal. Ces pertes de charge réduisent de manière très sensible les performances du circuit RRA. Un tel fonctionnement avec des performances réduites est inacceptable, dans la mesure où le débit d'eau refroidie introduit dans la branche principale du T de raccordement et de mélange conditionne le temps de mise en arrêt à froid du réacteur nucléaire.

Pour pallier ces inconvénients, on a proposé, dans le FR 03 14640, un dispositif de mélange comportant une paroi de protection ayant une forte transparence et des éléments de mélange des fluides disposés à l'intérieur de la paroi de protection.

Un tel dispositif est d'une réalisation plus complexe qu'un simple élément tubulaire de tuyauterie en forme de T. En outre, cette solution présente le risque de création de corps migrants dans le circuit principal.

De manière générale, dans le cas des circuits auxiliaires des réacteurs nucléaires à eau sous pression, il est souhaitable de disposer de T de raccordement et de mélange qui peuvent présenter une bonne tenue, en particulier à la fatigue thermique, lorsqu'ils assurent le mélange d'un premier fluide arrivant à l'élément de tuyauterie en forme de T par une première extrémité d'une première branche et d'un second fluide parvenant à l'élément de tuyauterie en forme de T par une seconde branche présentant un écart de température important avec le premier fluide, par exemple 50°C.

Dans la construction des réacteurs nucléaires à eau sous pression, on a utilisé des aciers martensitiques inoxydables, par exemple de type Z5CND13-4, Z12C13 ou Z12CN13, pour la fabrication par forgeage de pièces ou composants des mécanismes de déplacement des barres de commande de la réactivité du coeur du réacteur. Toutefois, de tels aciers martensitiques inoxydables n'ont jamais été envisagés pour la réalisation d'éléments de tuyauterie destinés à être fixés par soudage à des tuyauteries en acier inoxydable austénitique d'un circuit auxiliaire du réacteur nucléaire.

Le but de l'invention est donc de proposer un élément de tuyauterie en forme de T d'un circuit auxiliaire d'un réacteur nucléaire refroidi par de l'eau sous pression raccordé à un circuit primaire du réacteur nucléaire dans lequel circule de l'eau de refroidissement du réacteur, comportant une branche principale tubulaire ayant une première extrémité, pour son raccordement à un premier tronçon de tuyauterie du circuit auxiliaire et une seconde extrémité, pour son raccordement à un second tronçon de tuyauterie du circuit auxiliaire et une branche latérale ayant un axe dans une disposition angulaire par rapport à l'axe de la branche principale et une extrémité libre de raccordement à un troisième tronçon de tuyauterie du circuit auxiliaire, de telle sorte que le premier, le second et le troisième tronçons de tuyauterie du circuit auxiliaire assurent, lorsque le circuit auxiliaire est en service, chacun une fonction différente des deux autres tronçons, prise parmi l'arrivée d'un premier fluide à haute température dans l'élément de tuyauterie en forme de T, la fourniture d'un second fluide à une température inférieure à la température du premier fluide, à l'élément de tuyauterie et l'évacuation d'un mélange du premier et du second fluides réalisé dans l'élément de tuyauterie en forme de T, cet élément de tuyauterie présentant une bonne résistance à la fatigue thermique, sans qu'il soit nécessaire de prévoir une manchette de protection.

Dans ce but, l'élément de tuyauterie suivant l'invention est réalisé en acier martensitique inoxydable.

Selon des caractéristiques plus particulières qui seront prises isolément ou en combinaison :
- l'acier martensitique inoxydable contient (en pourcentages pondéraux) jusqu'à 0,060 % de carbone, de 12 % à 14 % de chrome, de 3,50 % à 4,50 % de nickel, de 0,30 % à 0,70 % de molybdène, de 0,50 % à 1 % de manganèse, de 0,30 % à 0,60 % de silicium, moins de 0,020 % de soufre, moins de 0,030 % de phosphore, le reste de la composition, à l'exception des impuretés éventuelles, étant constitué par du fer.
- l'acier martensitique inoxydable contient (en pourcentages pondéraux) : jusqu'à 0,050 % de carbone, de 12,50 % à 14 % de chrome, de 3,50 % à 4,50 % de nickel, de 0,50 % à 0,70 % de molybdène, de 0,50 % à 1,00 % de manganèse, de 0,30 % à 0,60 % de silicium, moins de 0,005 % de soufre et moins de 0,005 % de phosphore, le reste de l'alliage, à l'exception des impuretés inévitables, étant constitué par du fer.
- l'élément de tuyauterie est réalisé par un forgeage avec un coefficient de corroyage global supérieur à 3 suivi d'un traitement thermique comportant une trempe à l'huile depuis une température de 950°C à 1080°C et un revenu à une température supérieure à 580°C.
- l'élément de tuyauterie est réalisé sous la forme d'un T dissymétrique, la branche latérale étant reliée à la branche principale, dans une zone de la branche principale non équidistante de la première et de la seconde extrémités de la branche principale.
L'invention est également relative à
- une pièce de raccordement en acier inoxydable austénitique d'un circuit auxiliaire d'un réacteur nucléaire à eau sous pression avec un élément de tuyauterie en forme de T comportant l'élément tubulaire en forme de T en acier martensitique inoxydable et, raccordés bout à bout, respectivement à la première et à la seconde extrémités de la branche principale et à l'extrémité libre de la branche latérale, des éléments tubulaires de raccordement respectifs en acier inoxydable austénitique soudés bout à bout chacun à une extrémité respective de la branche principale ou de la branche latérale de l'élément tubulaire en forme de T.
- un procédé de réalisation et de montage d'un élément de tuyauterie en forme de T d'un circuit auxiliaire d'un réacteur nucléaire refroidi par de l'eau sous pression dans lequel :
- on réalise un élément de tuyauterie en forme de T en acier martensitique inoxydable par forgeage ou matriçage ;
- on réalise un traitement thermique de l'élément de tuyauterie forgé par une trempe à l'huile depuis une température comprise entre 950°C et 1080°C suivie d'un revenu à une température supérieure à 580°C ;
- on fixe par soudage bout à bout à la première et à la seconde extrémités de la branche principale et à l'extrémité libre de la branche latérale de l'élément de tuyauterie des éléments tubulaires de raccordement en acier inoxydable austénitique ;
- on fixe par soudage sur les tuyauteries en acier inoxydable austénitique du circuit auxiliaire du réacteur nucléaire à eau sous pression l'élément de tuyauterie en forme de T, par soudage bout à bout des éléments de raccordement sur des tronçons d'extrémité libres des tuyauteries en acier inoxydable austénitique du circuit auxiliaire.

De préférence:
- on réalise le soudage bout à bout de chacun des éléments tubulaires de raccordement en acier inoxydable austénitique sur le tronçon d'extrémité correspondant de l'élément de tuyauterie en forme de T en acier martensitique inoxydable par l'un des procédés suivants :
- réalisation d'une liaison bimétallique en acier inoxydable austénitique par dépôt d'un beurrage en acier inoxydable austénitique sur l'extrémité de l'élément tubulaire en forme de T en acier martensitique inoxydable et remplissage d'un chanfrein entre le beurrage en acier inoxydable austénitique et l'élément de raccordement correspondant par un métal d'apport en acier inoxydable austénitique ;
- réalisation d'une liaison bimétallique en alliage à base de nickel par dépôt d'un métal d'apport en alliage à base de nickel dans un chanfrein étroit entre l'extrémité de l'élément de tuyauterie en forme de T en acier martensitique inoxydable et l'élément tubulaire de raccordement en acier inoxydable austénitique correspondant ;
- réalisation d'une liaison bimétallique en acier martensitique inoxydable par dépôt d'un métal d'apport en acier martensitique inoxydable dans un chanfrein entre l'extrémité de raccordement de l'élément de tuyauterie en forme de T en acier martensitique inoxydable et l'élément de raccordement en acier inoxydable austénitique.

Afin de bien faire comprendre l'invention, on va décrire, à titre d'exemple, en se référant aux figures jointes en annexe, le circuit de refroidissement à l'arrêt RRA d'un réacteur nucléaire à eau sous pression et un élément de tuyauterie en forme de T suivant l'invention utilisé sur le circuit RRA.

La figure 1 est une vue schématique d'un circuit de refroidissement à l'arrêt RRA d'un réacteur nucléaire à eau sous pression.

La figure 2 est une vue en perspective d'une partie du circuit RRA comportant un élément tubulaire de raccordement et de mélange en forme de T.

La figure 3 est une vue en perspective d'une pièce de raccordement comportant un élément de tuyauterie en forme de T suivant l'invention permettant d'assurer le montage ou le remplacement d'un élément de tuyauterie en T sur un circuit auxiliaire neuf ou usagé d'un réacteur nucléaire à eau sous pression.

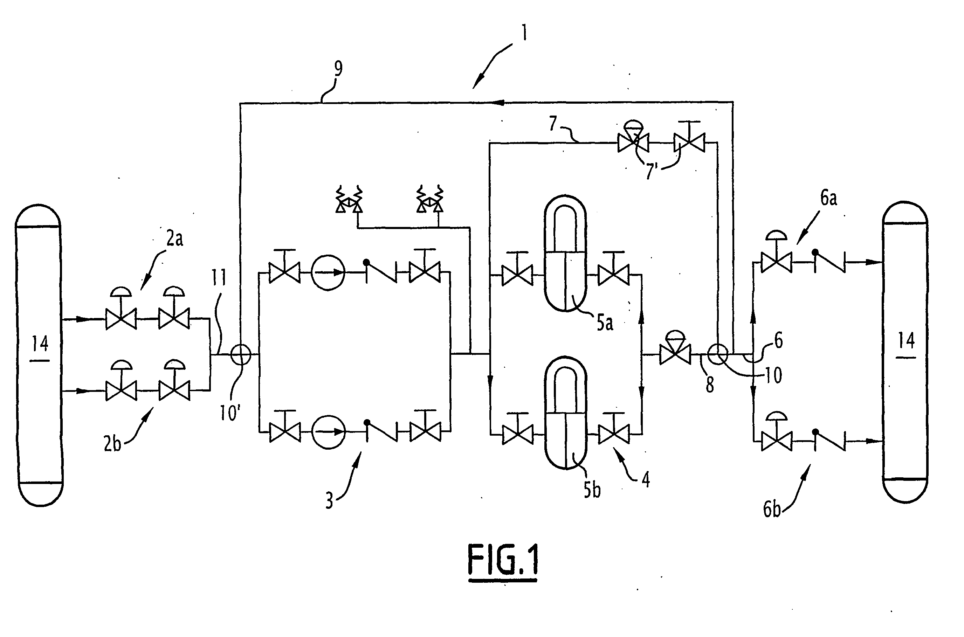

Sur la figure 1, on a représenté de manière schématique un circuit de refroidissement à l'arrêt RRA d'un réacteur nucléaire à eau sous pression relié au circuit primaire 14 du réacteur nucléaire dans lequel circule de l'eau sous pression constituant le fluide de refroidissement primaire du réacteur nucléaire.

Le circuit primaire 14 du réacteur nucléaire comporte plusieurs boucles sur chacune desquelles sont disposés une pompe primaire de circulation du fluide primaire et un générateur de vapeur reliés à la cuve du réacteur nucléaire dans laquelle est disposé le coeur constitué par des assemblages de combustible. Le circuit primaire d'un réacteur nucléaire à eau sous pression comporte généralement trois ou quatre boucles.

Le circuit RRA 1 représenté sur la figure 1 est relié à deux branches chaudes du circuit primaire 14, c'est-à-dire deux branches assurant le transfert d'eau primaire échauffée au contact du coeur vers un générateur de vapeur, par l'intermédiaire de conduites de prélèvement 2a, 2b sur lesquelles sont disposées des vannes d'arrêt qui peuvent être fermées pour isoler le circuit RRA du circuit primaire, ou ouvertes pour permettre le prélèvement d'eau primaire par le circuit RRA qui en assure le refroidissement.

L'eau primaire prélevée dans le circuit primaire par les conduites d'arrivée 2a et 2b du circuit RRA est à une température inférieure à 180°C et à une pression inférieure à 45 bars, dans les phases d'utilisation du circuit RRA.

Les conduites d'arrivée 2a et 2b sont reliées à un double circuit de pompage 3 comportant deux pompes placées en parallèle pour la circulation d'eau primaire dans le circuit RRA. En aval de l'étage de pompage 3, est disposé un double circuit de refroidissement 4 comportant un premier échangeur de chaleur 5a et un second échangeur de chaleur 5b placés en parallèle pour le refroidissement de l'eau primaire circulant dans le circuit RRA par un fluide de réfrigération qui est généralement constitué par de l'eau. Le circuit RRA est relié, en aval de l'étage de refroidissement, par l'intermédiaire de conduites de sortie 6a, 6b, à deux branches froides du circuit primaire, c'est-à-dire à deux branches reliées à la cuve du réacteur nucléaire par l'intermédiaire desquelles de l'eau de refroidissement du réacteur refroidie dans un générateur de vapeur est renvoyée dans la cuve du réacteur nucléaire.

Le circuit RRA comporte de plus une conduite de dérivation 7 reliée à la partie amont de l'étage de refroidissement 4, permettant de faire parvenir une partie de l'eau de refroidissement du réacteur provenant des branches chaudes par l'intermédiaire de l'étage de pompage 3 à une conduite d'évacuation 8 reliée à la partie aval de l'étage de refroidissement 4, à l'une de ses extrémités, et aux conduites de sortie 6a et 6b du circuit RRA par l'intermédiaire d'une conduite de liaison 6 à sa seconde extrémité, de manière à mélanger à l'eau primaire refroidie à la sortie de l'étage de refroidissement 4, de l'eau primaire non refroidie provenant de l'étage de pompage en amont de l'étage de refroidissement.

Le passage et le réglage d'un débit d'eau non refroidie amenée par la conduite 7 à la conduite d'évacuation 8 sont réglés par des vannes de réglage et d'arrêt 7'.

Une conduite de renvoi 9 de petit diamètre (environ 50 mm dans le cas d'un circuit RRA classique) est également reliée, à une première extrémité, à la conduite de liaison 6 et, à sa seconde extrémité, à une seconde conduite de liaison 11 assurant le passage de l'eau primaire non refroidie entre les conduites d'arrivée 2a et 2b et l'étage de pompage 3. La conduite de renvoi 9 présente un diamètre sensiblement inférieur au diamètre des autres tuyauteries du circuit RRA (généralement 300 mm environ) et n'assure le renvoi que d'un débit faible d'eau primaire mélangée à de l'eau refroidie parvenant dans la conduite de liaison 6, dans le courant d'eau primaire non refroidi circulant dans la conduite de liaison 11.

La conduite de dérivation 7 est reliée à la conduite d'évacuation 8 par un premier élément de tuyauterie en forme de T 10 qui peut être réalisé suivant l'invention.

De même, la conduite de renvoi 9 est reliée à la conduite de liaison 11 par l'intermédiaire d'un second élément de tuyauterie en forme de T 10' qui peut être réalisé suivant l'invention.

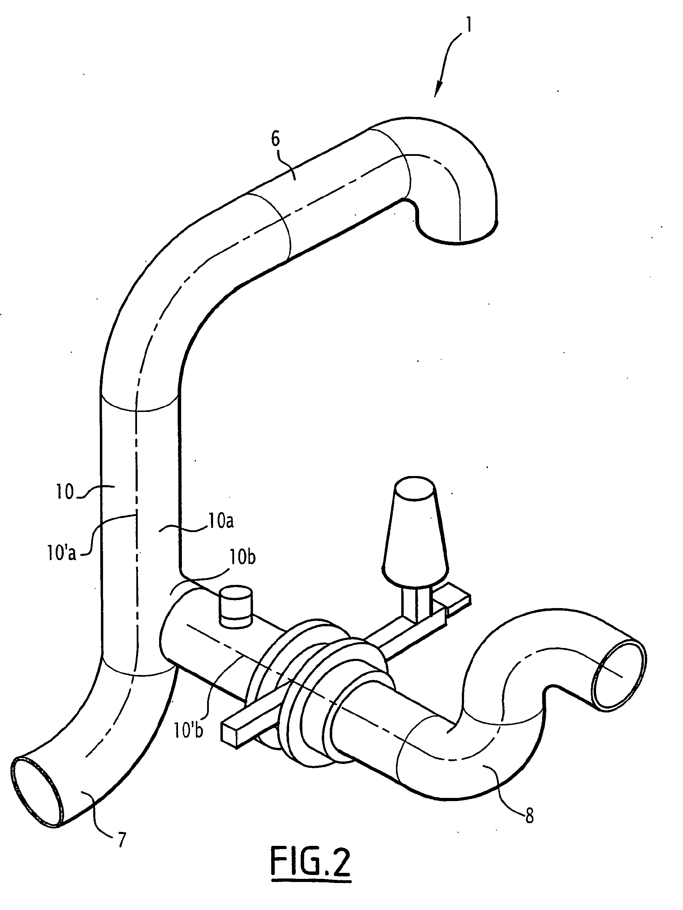

Sur la figure 2, on a représenté une partie du circuit RRA, au niveau du raccordement entre la conduite d'évacuation 8 de l'eau refroidie et les conduites 7 et 6 de circulation d'eau primaire en direction des conduites de sortie 6a et 6b.

L'élément tubulaire en forme de T 10 comporte une branche principale 10a dont l'axe est sensiblement vertical et une branche latérale 10b dont l'axe est sensiblement horizontal.

L'extrémité de la conduite de dérivation 7 qui présente la forme d'un coude constitue un premier tronçon relié à une extrémité ou extrémité d'entrée de la branche principale 10a de l'élément de tuyauterie 10 et la conduite 6 reliée aux conduites de sortie 6a et 6b constitue un second tronçon coudé relié à l'extrémité de sortie de la branche principale 10a de l'élément de tuyauterie 10 en forme de T.

L'extrémité de la conduite 8 d'évacuation d'eau refroidie constitue un troisième tronçon de tuyauterie relié à la branche latérale 10b de l'élément de tuyauterie 10. Une vanne de réglage permet de commander l'écoulement d'eau refroidie vers l'élément de tuyauterie 10 en forme de T de raccordement et de mélange.

De cette manière, l'eau non refroidie provenant des branches chaudes du réacteur nucléaire et parvenant à l'élément de tuyauterie en forme de T 10 par la conduite de dérivation 7 est mélangée avec de l'eau refroidie introduite dans l'élément de tuyauterie 10 par la conduite d'évacuation 8 reliée à la branche latérale 10b, le mélange étant évacué par la conduite de liaison 6 reliée à l'extrémité de sortie de la branche principale 10a de l'élément 10 en forme de T.

Il peut être avantageux de réaliser l'élément de tuyauterie 10 sous forme dissymétrique, la branche latérale étant par exemple reliée à la branche principale à une certaine distance de sa partie médiane.

Par exemple, dans le cas où les canalisations 6 et 7 du circuit RRA et la branche principale 10a de l'élément de tuyauterie 10 en forme de T ont un diamètre de l'ordre de 300 mm, la longueur de la branche principale 10a suivant son axe vertical 10'a peut être de l'ordre d'un mètre et la distance suivant la direction de l'axe 10'a de la branche principale 10a entre l'axe 10'b de la branche latérale 10b et l'extrémité d'entrée de la branche principale 10a peut être de l'ordre de 0,25 m, c'est-à-dire approximativement égale au quart de la longueur de la branche principale 10a.

L'élément de tuyauterie 10 est constitué sous la forme d'une simple tuyauterie en T comportant la branche principale 10a et la branche latérale 10b, l'une et l'autre de forme tubulaire, et ne renferme pas de manchette de protection interne, de sorte que le mélange des fluides est réalisé par contact direct des fluides à l'intérieur de la branche principale 10a constituant une chambre de mélange.

Selon l'invention, l'élément de tuyauterie en forme de T 10 comportant la branche principale 10a et la branche latérale 10b solidaires l'une de l'autre est réalisé en acier martensitique inoxydable.

De manière préférentielle, l'élément de tuyauterie 10 en forme de T est réalisé en acier martensitique inoxydable de type 13-4 dont la désignation normalisée est Z5CND13-4, cet acier comportant de l'ordre de 0,050 % de carbone, 13 % de chrome et 4 % de nickel.

Selon la norme européenne NF EN10222-5 et selon la spécification technique M3204 (code RCC-M édition 2000), la composition chimique d'un tel acier 13-4 est définie par les fourchettes suivantes relatives à chacun des éléments (en pourcentages pondéraux) :
carbone : 0,060 % maximum
chrome : 12,00 % - 14,00 %
nickel : 3,50 % - 4,50 %
molybdène : 0,30 % - 0,70 %
manganèse : 0,50 % - 1,00 %
silicium : 0,30 % - 0,60 %
soufre : 0,020 % maximum
phosphore : 0,030 % maximum,
le reste de la composition, à l'exception des impuretés inévitables étant constitué par du fer.

Les propriétés mécaniques qu'on doit obtenir sur cet acier martensitique inoxydable, selon la spécification technique rappelée ci-dessus sont les suivantes :
Rp0,2 (limite élastique à 0,2 %) valeur minimale : 685 MPa à 20°C
Rm (Résistance mécanique) : 780 à 980 Mpa à 20°C
A % (Allongement à la rupture) valeur minimale : 15 % à 20°C
Résilience (valeur minimale moyenne) 56 Joules à 0°C
Résilience (valeur minimale individuelle) 40 Joules à 0°C.

Pour obtenir des propriétés de résistance à la fatigue thermique améliorées, dans le cas des éléments de tuyauterie suivant l'invention, il est préférable de réduire la teneur maximale en soufre à un niveau bien inférieur à 0,020 %. Une limite maximale de 0,005 % est donc considérée comme préférentielle.

Afin d'éviter une sensibilité du matériau au phénomène de fragilité de revenu réversible dû à la ségrégation du phosphore, il est préférable de réduire la teneur maximale en phosphore à un niveau bien inférieur à 0,030 %. Une limite maximale de 0,005 % est donc considérée comme préférentielle.

De manière générale, dans le cas de la réalisation d'un élément de tuyauterie en T d'un circuit auxiliaire de réacteur nucléaire à eau sous pression, il est nécessaire de prévoir un acier martensitique ayant de bonnes caractéristiques de soudabilité ou de trempabilité.

Un tel acier dont la composition de base est celle de l'acier martensitique inoxydable 13-4 présente la composition préférentielle suivante :
carbone : 0,050 % maximum
chrome : 12,50 % - 14,00 %
nickel : 3,50 % - 4,50 %
molybdène : 0,50 % - 0,70 %
manganèse: 0,50 % -1,00 %
silicium : 0,30 % - 0,60 %
soufre : 0,005 % maximum
phosphore : 0,005 % maximum,
le reste de la composition, à l'exception des impuretés inévitables, étant constitué par du fer.

On voit que dans une telle composition, pour améliorer la soudabilité, on précise les teneurs des éléments carbone, chrome et molybdène.

L'élément de tuyauterie en T suivant l'invention est réalisé par forgeage ou matriçage avec un coefficient de corroyage (allongement au forgeage) global supérieur à 3.

L'élément tubulaire en T peut être réalisé en une seule pièce ou à partir de deux éléments tubulaires, à savoir la branche principale et la branche latérale qui sont ensuite soudées l'une à l'autre suivant le bord d'une ouverture usinée dans la paroi de la branche principale.

L'élément de tuyauterie obtenu par forgeage subit un traitement thermique comportant une trempe à l'huile depuis une température de 950°C à 1080°C suivie d'un revenu à une température supérieure à 580°C, selon la spécification technique rappelée ci-dessus RCCM STRM 3204.

L'élément de tuyauterie en forme de T suivant l'invention est destiné à être raccordé par soudage bout à bout à des tuyauteries en acier inoxydable austénitique d'un circuit auxiliaire d'un réacteur nucléaire à eau sous pression tel qu'un circuit RRA.

Cette opération doit être réalisée sur le site du réacteur nucléaire, aussi bien dans le cas de la construction d'un réacteur nucléaire neuf que dans le cas du remplacement d'un élément de tuyauterie en T sur un circuit auxiliaire usagé d'un réacteur nucléaire ayant déjà fonctionné. Du fait que l'élément tubulaire en T est en acier martensitique inoxydable, son raccordement et son soudage sur le circuit auxiliaire nécessitent la réalisation de soudures hétérogènes (encore appelées liaisons bimétalliques LBM).

Les liaisons bimétalliques entre l'élément de tuyauterie en acier martensitique et les tuyauteries d'un circuit auxiliaire en acier inoxydable austénitique (ou, de préférence, entre l'élément en forme de T et des pièces de raccordement intermédiaires en acier inoxydable austénitique) peuvent être réalisées selon différentes techniques qui seront mentionnées ci-dessous.
- Selon une première technique, on peut réaliser des liaisons bimétalliques en acier inoxydable en effectuant un dépôt épais (ou beurrage) d'acier inoxydable austénitique sur les extrémités libres des branches de l'élément de tuyauterie en forme de T, suivi d'un remplissage d'un chanfrein délimité entre la couche de beurrage en acier inoxydable austénitique et l'extrémité de la pièce tubulaire en acier inoxydable austénitique par un métal d'apport en acier inoxydable d'une composition compatible avec celle de la couche de beurrage et de la pièce tubulaire en acier inoxydable austénitique. Le beurrage et le soudage peuvent être réalisés avec un métal d'apport tel qu'un acier inoxydable austénitique 316 L, 309 L ou 308 L. Après le beurrage, on doit réaliser un traitement thermique de détensionnement de l'extrémité de l'élément tubulaire en forme de T.
- On peut également réaliser une liaison bimétallique en un alliage de nickel tel que l'alliage 52, en déposant le métal d'apport constitué par l'alliage 52 dans un chanfrein étroit entre l'extrémité de l'élément de tuyauterie en forme de T en acier martensitique inoxydable et la pièce tubulaire en acier inoxydable austénitique, sans beurrage préalable de l'extrémité de l'élément tubulaire en forme de T.
- On peut également réaliser une liaison bimétallique avec un métal d'apport en acier martensitique inoxydable qui est déposé dans un chanfrein entre l'extrémité de l'élément de tuyauterie en forme de T en acier martensitique inoxydable et un élément tubulaire en acier inoxydable austénitique.

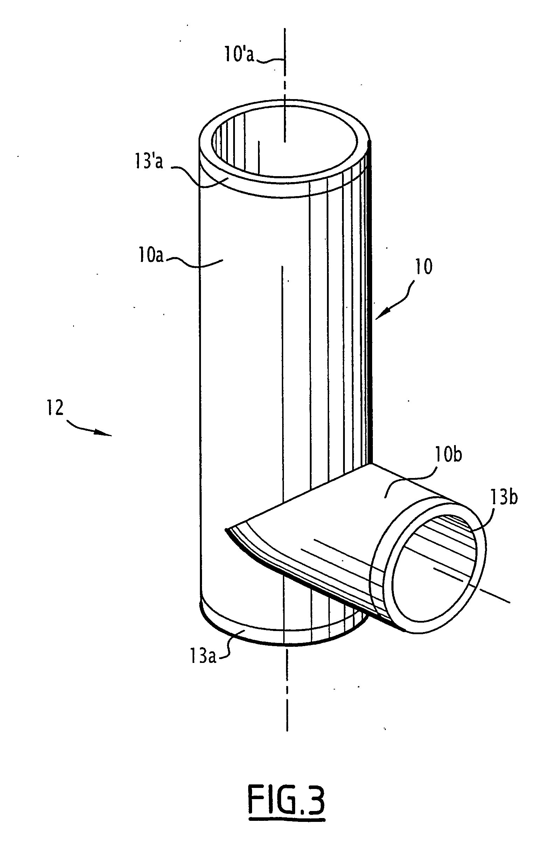

Bien qu'il soit possible de réaliser, par l'une des techniques de soudage indiquées ci-dessus, une jonction directe des extrémités de l'élément de tuyauterie en forme de T avec des extrémités laissées en attente de deux tuyauteries en acier inoxydable austénitique du circuit auxiliaire, il est préférable de réaliser en usine, préalablement au montage sur site, de l'élément tubulaire en forme de T, une pièce de raccordement 12 telle que représentée sur la figure 3.

Une telle pièce de raccordement qui comporte l'élément de tuyauterie proprement dit 10 est constituée de la branche principale 10a et de la branche latérale 10b solidaires l'une de l'autre et d'éléments tubulaires de raccordement en acier inoxydable austénitique, respectivement 13a et 13'a à la première et à la seconde extrémité de la branche principale 10a et 13b à l'extrémité libre de raccordement de la branche latérale 10b.

Les éléments tubulaires de raccordement 13a, 13'a et 13b sont obtenus de préférence par découpage de tronçons dans des tubes sans soudure en un acier inoxydable austénitique tel que l'acier 304 L. Les tronçons tubulaires de raccordement sont ensuite soudés bout à bout sur les extrémités de l'élément de tuyauterie 10 en forme de T obtenu préalablement par un forgeage suivi d'un traitement thermique. Le soudage des éléments tubulaires de raccordement en acier inoxydable austénitique sur les extrémités de l'élément de tuyauterie en forme de T en acier martensitique peut être réalisé par l'une des trois techniques décrites plus haut. Cette opération est réalisée en usine. Après arasage et polissage interne puis contrôle des soudures, la pièce peut être utilisée sur le site du réacteur nucléaire pour assurer le montage ou le remplacement d'un élément de tuyauterie en forme de T d'un circuit auxiliaire de réacteur nucléaire à eau sous pression.

Les soudures à réaliser sur site sont alors des soudures homogènes entre les éléments de raccordement tubulaires et les extrémités des canalisations du circuit auxiliaire en attente en acier inoxydable austénitique.

Les éléments de tuyauterie de raccordement et de mélange suivant l'invention en forme de T en acier martensitique inoxydable permettent de réaliser le mélange des fluides. De plus, l'utilisation d'un acier martensitique pour la réalisation de l'élément de tuyauterie de raccordement et de mélange en forme de T permet d'améliorer de manière significative sa tenue à la fatigue thermique, par rapport aux éléments de tuyauterie en forme de T en acier inoxydable austénitique selon l'art antérieur. En particulier, il est possible de réaliser, à l'intérieur d'éléments de tuyauterie en forme de T, le mélange de fluides à des températures dont la différence est largement supérieure à 50°C (par exemple 160°C) tout en gardant une durée de vie suffisante du T de raccordement pour une utilisation normale du circuit RRA.

En utilisant une forme de T largement dissymétrique, la branche latérale étant reliée à la branche principale dans une zone éloignée de la partie centrale de la branche principale (dans la direction axiale) et proche de l'extrémité d'entrée de la branche principale, de manière que la branche principale couvre les zones de fluctuations, on éloigne la zone de mélange de la soudure de raccordement aval de l'élément de tuyauterie. La soudure de raccordement aval de l'élément de tuyauterie est ainsi éloignée de la zone dans laquelle se produisent les oscillations de température dues à l'introduction d'un second fluide à plus basse température dans le courant du premier fluide.

L'invention ne se limite pas au mode de réalisation qui a été décrit.

Bien que l'acier martensitique inoxydable 13-4. de composition ajustée mentionné plus haut permette d'obtenir à la fois de bonnes conditions de soudabilité de l'élément de tuyauterie et une très bonne tenue à la fatigue thermique, il est possible d'envisager l'utilisation d'aciers martensitiques inoxydables ayant d'autres compositions, par exemple des aciers martensitiques inoxydables selon les désignations normalisées Z12C13, Z12CN13, Z5CND16.04 ou encore Z6CNU17.04.

L'entrée du premier et du second fluides dans l'élément de tuyauterie en forme de T et l'évacuation du fluide mélangé peuvent être réalisées par l'une quelconque des extrémités de la branche principale ou par la branche latérale de l'élément de tuyauterie en forme de T.

La branche latérale peut faire un angle différent de 90° avec la branche principale.

L'invention peut s'appliquer au montage ou au remplacement des T de mélange à grand débit ou à faible débit des circuits de refroidissement à l'arrêt RRA de tous les réacteurs PWR.

Les éléments de tuyauterie en forme de T suivant l'invention en acier martensitique peuvent être utilisés également comme T de raccordement et de mélange sur différents circuits auxiliaires en acier inoxydable austénitique des réacteurs nucléaires refroidis par de l'eau sous pression, en dehors des circuits de refroidissement à l'arrêt RRA.

## Revendications

1. Elément de tuyauterie en forme de T d'un circuit auxiliaire (1) d'un réacteur nucléaire refroidi par de l'eau sous pression raccordé à un circuit primaire (14) du réacteur nucléaire dans lequel circule de l'eau de refroidissement du réacteur, comportant une branche principale tubulaire (10a) ayant une première extrémité, pour son raccordement à un premier tronçon de tuyauterie (7) du circuit auxiliaire (1) et une seconde extrémité, pour son raccordement à un second tronçon de tuyauterie (6) du circuit auxiliaire (1) et une branche latérale (10b) ayant un axe dans une disposition angulaire par rapport à l'axe de la branche principale (10a) et une extrémité libre de raccordement à un troisième tronçon de tuyauterie (8) du circuit auxiliaire (1), de telle sorte que le premier, le second et le troisième tronçons de tuyauterie (6, 7, 8) du circuit auxiliaire assurent, lorsque le circuit auxiliaire est en service, chacun une fonction différente des deux autres tronçons, prise parmi l'arrivée d'un premier fluide à haute température dans l'élément de tuyauterie en forme de T, la fourniture d'un second fluide à une température inférieure à la température du premier fluide, à l'élément de tuyauterie et l'évacuation d'un mélange du premier et du second fluides réalisé dans l'élément de tuyauterie en forme de T, **caractérisé par le fait qu'**il est réalisé en acier martensitique inoxydable.

2. Elément de tuyauterie suivant la revendication 1, **caractérisé par le fait que** l'acier martensitique inoxydable contient (en pourcentages pondéraux) jusqu'à 0,060 % de carbone, de 12 % à 14 % de chrome, de 3,50 % à 4,50 % de nickel, de 0,30 % à 0,70 % de molybdène, de 0,50 % à 1 % de manganèse, de 0,30 % à 0,60 % de silicium, moins de 0,020 % de soufre, moins de 0,030 % de phosphore, le reste de la composition, à l'exception des impuretés éventuelles, étant constitué par du fer.

3. Elément de tuyauterie suivant la revendication 2, **caractérisé par le fait que** l'acier martensitique inoxydable contient (en pourcentages pondéraux) : jusqu'à 0,050 % de carbone, de 12,50 % à 14 % de chrome, de 3,50 % à 4,50 % de nickel, de 0,50 % à 0,70 % de molybdène, de 0,50 % à 1,00 % de manganèse, de 0,30 % à 0,60 % de silicium, moins de 0,005 % de soufre et moins de 0,005 % de phosphore, le reste de l'alliage, à l'exception des impuretés inévitables, étant constitué par du fer.

4. Elément de tuyauterie suivant l'une quelconque des revendications 2 et 3, **caractérisé par le fait qu'**il est réalisé par un forgeage avec un coefficient de corroyage global supérieur à 3 suivi d'un traitement thermique comportant une trempe à l'huile depuis une température de 950°C à 1080°C et un revenu à une température supérieure à 580°C.

5. Elément de tuyauterie suivant l'une quelconque des revendications 1 à 4, **caractérisé par le fait qu'**il est réalisé sous la forme d'un T dissymétrique, la branche latérale (10b) étant reliée à la branche principale (10a), dans une zone de la branche principale (10a) non équidistante de la première et de la seconde extrémités de la branche principale (10a).

6. Pièce de raccordement de tuyauteries (6, 7, 8) en acier inoxydable austénitique d'un circuit auxiliaire (1) d'un réacteur nucléaire à eau sous pression avec un élément de tuyauterie (10) en forme de T selon l'une quelconque des revendications 1 à 5, **caractérisée par le fait qu'**elle comporte l'élément tubulaire (10) en forme de T en acier martensitique inoxydable et, raccordés bout à bout, respectivement à la première et à la seconde extrémités de la branche principale (10a) et à l'extrémité libre de la branche latérale (10b), des éléments tubulaires de raccordement (13a, 13'a, 13b) respectifs en acier inoxydable austénitique soudés bout à bout chacun à une extrémité respective de la branche principale (10a) ou de la branche latérale (10b) de l'élément tubulaire en forme de T (10).

7. Procédé de réalisation et de montage d'un élément de tuyauterie (10) en forme de T d'un circuit auxiliaire (1) d'un réacteur nucléaire refroidi par de l'eau sous pression suivant l'une quelconque des revendications 1 à 5, **caractérisé par le fait :**
- **qu'**on réalise un élément de tuyauterie (10) en forme de T en acier martensitique inoxydable par forgeage ou matriçage ;
- **qu'**on réalise un traitement thermique de l'élément de tuyauterie forgé par une trempe à l'huile depuis une température comprise entre 950°C et 1080°C suivie d'un revenu à une température supérieure à 580°C ;
- **qu'**on fixe par soudage bout à bout à la première et à la seconde extrémités de la branche principale (10a) et à l'extrémité libre de la branche latérale (10b) de l'élément de tuyauterie (10) des éléments tubulaires de raccordement (13a, 13'a, 13b) en acier inoxydable austénitique ;
- **qu'**on fixe par soudage sur les tuyauteries en acier inoxydable austénitique du circuit auxiliaire (1) du réacteur nucléaire à eau sous pression l'élément de tuyauterie en forme de T (10), par soudage bout à bout des éléments de raccordement (13a, 13'a, 13b) sur des tronçons d'extrémité libres des tuyauteries en acier inoxydable austénitique du circuit auxiliaire (1).

8. Procédé suivant la revendication 7, **caractérisé par le fait qu'**on réalise le soudage bout à bout de chacun des éléments tubulaires de raccordement (13a, 13'a, 13b) en acier inoxydable austénitique sur le tronçon d'extrémité correspondant de l'élément de tuyauterie en forme de T en acier martensitique inoxydable par l'un des procédés suivants :
- réalisation d'une liaison bimétallique en acier inoxydable austénitique par dépôt d'un beurrage en acier inoxydable austénitique sur l'extrémité de l'élément tubulaire en forme de T (10) en acier martensitique inoxydable et remplissage d'un chanfrein entre le beurrage en acier inoxydable austénitique et l'élément de raccordement correspondant par un métal d'apport en acier inoxydable austénitique ;
- réalisation d'une liaison bimétallique en alliage à base de nickel par dépôt d'un métal d'apport en alliage à base de nickel dans un chanfrein étroit entre l'extrémité de l'élément de tuyauterie en forme de T en acier martensitique inoxydable et l'élément tubulaire de raccordement en acier inoxydable austénitique correspondant ;
- réalisation d'une liaison bimétallique en acier martensitique inoxydable par dépôt d'un métal d'apport en acier martensitique inoxydable dans un chanfrein entre l'extrémité de raccordement de l'élément de tuyauterie en forme de T en acier martensitique inoxydable et l'élément de raccordement en acier inoxydable austénitique.

## Claims

1. T-shaped pipework element for an auxiliary circuit (1) of a nuclear reactor cooled by pressurised water, connected to a coolant system (14) of the nuclear reactor in which cooling water of the reactor flows, comprising a main tubular branch (10a) which has a first end, for the connection thereof to a first pipework portion (7) of the auxiliary circuit (1), and a second end, for the connection thereof to a second pipework portion (6) of the auxiliary circuit (1) and a lateral branch (10b) which has an axis in an angular arrangement relative to the axis of the main branch (10a) and a free end for connection to a third pipework portion (8) of the auxiliary circuit (1), so that the first, the second and the third pipework portions (6, 7, 8) of the auxiliary circuit, when the auxiliary circuit is operational, each carry out a function different from the other two portions, including supplying a first fluid at high temperature in the T-shaped pipework element, providing a second fluid at a temperature which is lower than the temperature of the first fluid for the pipework element, and discharging a mixture of the first and second fluids produced in the T-shaped pipework element, **characterised in that** it is produced from martensitic stainless steel.

2. Pipework element according to claim 1, **characterised in that** the martensitic stainless steel contains (in percentages by weight) up to 0.060% of carbon, from 12% to 14% of chromium, from 3.50% to 4.50% of nickel, from 0.30% to 0.70% of molybdenum, from 0.50% to 1% of manganese, from 0.30% to 0.60% of silicon, less than 0.020% of sulphur, less than 0.030% of phosphorus, the remainder of the composition, with the exception of any impurities, being constituted by iron.

3. Pipework element according to claim 2, **characterised in that** the martensitic stainless steel contains (in percentages by weight) up to 0.050% of carbon, from 12.50% to 14% of chromium, from 3.50% to 4.50% of nickel, from 0.50% to 0.70% of molybdenum, from 0.50% to 1.00% of manganese, from 0.30% to 0.60% of silicon, less than 0.005% of sulphur and less than 0.005% of phosphorus, the remainder of the alloy, with the exception of the inevitable impurities, being constituted by iron.

4. Pipework element according to either claim 2 or 3, **characterised in that** it is produced by means of forging with a global forging coefficient greater than 3 followed by a thermal processing operation comprising oil quenching from a temperature of from 950°C to 1080°C and a tempering operation at a temperature greater than 580°C.

5. Pipework element according to any one of claims 1 to 4, **characterised in that** it is produced in an asymmetrical T-shape, the lateral branch (10b) being connected to the main branch (10a) in a zone of the main branch (10a) which is not equidistant from the first and the second ends of the main branch (10a).

6. Austenitic stainless steel pipework connection piece (6, 7, 8) for an auxiliary circuit (1) of a pressurised water nuclear reactor having a T-shaped pipework element (10) according to any one of claims 1 to 5, **characterised in that** it comprises the martensitic stainless steel T-shaped tubular element (10) and, connected end-to end to the first and second ends of the main branch (10a) and to the free end of the lateral branch (10b), respectively, austenitic stainless steel tubular connection elements (13a, 13'a, 13b) which are each butt-welded to a respective end of the main branch (10a) or the lateral branch (10b) of the T-shaped tubular element (10).

7. Method for producing and assembling a T-shaped pipework element (10) of an auxiliary circuit (1) of a nuclear reactor cooled by pressurised water according to any one of claims 1 to 5, **characterised in that**:
- a T-shaped pipework element (10) is produced from martensitic stainless steel by means of forging or stamping;
- the forged pipework element is thermally processed by means of oil quenching from a temperature of between 950°C and 1080°C, followed by a tempering operation at a temperature greater than 580°C;
- tubular connection elements (13a, 13'a, 13b) of austenitic stainless steel are fixed, by means of butt-welding, to the first and second ends of the main branch (10a) and to the free end of the lateral branch (10b) of the pipework element (10);
- the T-shaped pipework element (10) is fixed, by means of welding, to the austenitic stainless steel pipes of the auxiliary circuit (1) of the pressurised water nuclear reactor, by butt-welding the connection elements (13a, 13'a, 13b) to free end portions of the austenitic stainless steel pipes of the auxiliary circuit (1).

8. Method according to claim 7, **characterised in that** the butt-welding of each of the austenitic stainless steel tubular connection elements (13a, 13'a, 13b) is carried out on the corresponding end portion of the T-shaped pipework element of martensitic stainless steel using one of the following methods:
- producing a bi-metal connection of austenitic stainless steel by depositing a buttering of austenitic stainless steel on the end of the T-shaped tubular element (10) of martensitic stainless steel and filling a chamfer gap between the buttering of austenitic stainless steel and the corresponding connection element using a filler metal of austenitic stainless steel;
- producing a bi-metal connection of a nickel-based alloy by depositing a filler metal of a nickel-based alloy in a narrow chamfer gap between the end of the T-shaped pipework element of martensitic stainless steel and the corresponding tubular connection element of austenitic stainless steel;
- producing a bi-metal connection of martensitic stainless steel by depositing a filler metal of martensitic stainless steel in a chamfer gap between the connection end of the T-shaped pipework element of martensitic stainless steel and the connection element of austenitic stainless steel.

## Patentansprüche

1. T-förmiges Rohrleitungselement eines Hilfskreises (1) eines durch Druckwasser gekühlten Kernreaktors, der mit einem Primärkreis (14) des Kernreaktors verbunden ist, in welchem das Kühlwasser des Reaktors zirkuliert, aufweisend einen rohrförmigen Hauptarm (10a) mit einem ersten Ende zum Verbinden mit einem ersten Rohrleitungsabschnitt (7) des Hilfskreises (1) und einem zweiten Ende zum Verbinden mit einem zweiten Rohrleitungsabschnitt (6) des Hilfskreises (1) und einen Seitenarm (10b) mit einer Achse in einer Winkelanordnung in Bezug auf die Achse des Hauptarms (10a) und mit einem freien Ende zum Verbinden mit einem dritten Rohrleitungsabschnitt (8) des Hilfskreises (1), derart, dass der erste, der zweite und der dritte Rohrleitungsabschnitt (6, 7, 8) des Hilfskreises, während der Hilfskreis in Betrieb ist, jeder eine Funktion, die sich von den zwei anderen Abschnitten unterscheidet, aus dem Eintreten eines ersten Fluids hoher Temperatur in dem T-förmigen Rohrleitungselement, dem Zuführen eines zweiten Fluids mit einer Temperatur, die niedriger ist als die Temperatur des ersten Fluids, zu dem Rohrleitungselement, und dem Auslassen einer Mischung der ersten und zweiten Fluide, die in dem T-förmigen Rohrleitungselement erzielt wird, sicherstellt, **dadurch gekennzeichnet, dass** es aus rostfreiem martensitischem Stahl gefertigt ist.

2. Rohrleitungselement nach Anspruch 1, **dadurch gekennzeichnet, dass** der rostfreie martensitische Stahl (in Gewichtsprozenten) bis zu 0,060% Kohlenstoff, 12% bis 14% Chrom, 3,50% bis 4,50% Nickel, 0,30% bis 0,70% Molybdän, 0,50% bis 1% Mangan, 0,30% bis 0,60% Silizium, weniger als 0,020% Schwefel, weniger als 0,030% Phosphor enthält, wobei der Rest der Zusammensetzung, mit Ausnahme von etwaigen Verunreinigungen, durch Eisen gebildet wird.

3. Rohrleitungselement nach Anspruch 2, **dadurch gekennzeichnet, dass** der rostfreie martensitische Stahl (in Gewichtsprozenten) bis zu 0,050% Kohlenstoff, 12,50% bis 14% Chrom, 3,50% bis 4,50% Nickel, 0,50% bis 0,70% Molybdän, 0,50% bis 1,00% Mangan, 0,30% bis 0,60% Silizium, weniger als 0,005% Schwefel und weniger als 0,005% Phosphor enthält, wobei der Rest der Legierung, mit Ausnahme von unvermeidbaren Verunreinigungen, durch Eisen gebildet wird.

4. Rohrleitungselement nach einem der Ansprüche 2 und 3, **dadurch gekennzeichnet, dass** es durch Schmieden mit einem Gesamtverschmiedungsgrad größer als 3 gefertigt ist, gefolgt von einer Vergütung, umfassend eine Ölhärtung mit einer Temperatur von 950°C bis 1080°C und ein Anlassen bei einer Temperatur größer als 580°C.

5. Rohrleitungselement nach einem der Ansprüche 1 bis 4, **dadurch gekennzeichnet, dass** es in Form eines unsymmetrischen T gefertigt ist, wobei der Seitenarm (10b) mit dem Hauptarm (10a) in einem Bereich des Hauptarms (10a) verbunden ist, der nicht im gleichen Abstand von dem ersten und dem zweiten Ende des Hauptarms (10a) ist.

6. Verbindungsstück für Rohrleitungen (6, 7, 8) aus austenitischem rostfreien Stahl für einen Hilfskreis (1) eines Druckwasserkernreaktors, mit einem T-förmigen Rohrleitungselement (10) nach einem der Ansprüche 1 bis 5, **dadurch gekennzeichnet, dass** es das T-förmige Rohrelement (10) aus rostfreiem martensitischem Stahl und, stumpf aneinandergefügt, jeweils an den ersten und zweiten Enden des Hauptarms (10a) und am freien Ende des Seitenarms (10b), jeweilige Verbindungsrohrelemente (13a, 13'a, 13b) aus austenitischem rostfreien Stahl aufweist, die jedes stumpf mit einem entsprechenden Ende des Hauptarms (10a) oder des Seitenarms (10b) des T-förmigen Rohrelements (10) verschweißt sind.

7. Verfahren zur Herstellung und Montage eines T-förmigen Rohrleitungselements (10) für einen Hilfskreis (1) eines druckwassergekühlten Kernreaktors gemäß einem der Ansprüche 1 bis 5, **dadurch gekennzeichnet, dass**:
- man ein T-förmiges Rohrleitungselement (10) aus rostfreiem martensitischem Stahl durch Schmieden oder Umformen fertigt;
- man eine Vergütung des geschmiedeten Rohrleitungselements durch eine Ölhärtung mit einer Temperatur zwischen 950°C und 1080°C, gefolgt von einem Anlassen bei einer Temperatur oberhalb von 580°C durchführt;
- man durch stumpfes Verschweißen an den ersten und dem zweiten Enden des Hauptarms (10a) und an dem freien Ende des Nebenarms (10b) des Rohrleitungselements (10) Befestigungsrohrelemente (13a, 13'a, 13b) aus austenitischem rostfreien Stahl befestigt;
- man durch Schweißen auf den Rohrleitungen aus austenitischem rostfreien Stahl des Hilfskreises (1) des Druckwasserkernreaktors das T-förmige Rohrleitungselement (10) befestigt, durch stumpfes Verschweißen der Befestigungselemente (13a, 13'a, 13b) auf den freien Endabschnitten der Rohrleitungen aus austenitischem rostfreien Stahl des Hilfskreises (1).

8. Verfahren nach Anspruch 7, **dadurch gekennzeichnet, dass** man das stumpfe Verschweißen jedes der Befestigungsrohrelemente (13a, 13'a, 13b) aus austenitischem rostfreiem Stahl auf dem entsprechenden Endabschnitt des T-förmigen Rohrleitungselements aus rostfreiem martensitischem Stahl mittels einer der folgenden Verfahren durchführt:
- Herstellung einer bimetallischen Verbindung aus austenitischem rostfreiem Stahl durch Einbringen einer Zwischenlage aus austenitischem rostfreiem Stahl auf das Ende des T-förmigen Rohrelements (10) aus rostfreiem martensitischem Stahl und Auffüllen einer Fase zwischen der Zwischenlage aus austenitischem rostfreiem Stahl und dem entsprechenden Befestigungselement mittels eines Auftragsmetalls aus austenitischem rostfreiem Stahl;
- Herstellung einer bimetallischen Verbindung aus einer auf Nickel basierenden Legierung durch Einbringen eines Auftragsmetalls aus einer auf Nickel basierenden Legierung in eine schmale Fase zwischen dem Ende des T-förmigen Rohrleitungselements aus rostfreiem martensitischen Stahl und dem entsprechenden Befestigungsrohrelement aus austenitischem rostfreiem Stahl;
- Herstellung einer bimetallischen Verbindung aus rostfreiem martensitischem Stahl durch Einbringen eines Auftragsmetalls aus rostfreiem martensitischem Stahl in eine Fase zwischen dem Befestigungsende des T-förmigen Rohrleitungselements aus rostfreiem martensitischem Stahl und dem Befestigungselement aus austenitischem rostfreiem Stahl.
